# EUROPEAN PATENT SPECIFICATION

(11) **EP 2 843 820 B1**
(45) Date of publication and mention of the grant of the patent: **12.12.2018**
(21) Application number: 13782109.6
(22) Date of filing: 03.04.2013
(51) Int. Cl.: H02M 7/48, B60L 9/18, B60L 11/18, B60L 15/20

(54) **INVERTER UNIT AND ELECTRIC VEHICLE**
WECHSELRICHTER UND ELEKTRISCHES FAHRZEUG
UNITÉ D'INVERSEUR ET VÉHICULE ÉLECTRIQUE

(30) Priority: 27.04.2012 JP 2012102352
(43) Date of publication of application: 04.03.2015
(73) Proprietor: Panasonic Intellectual Property Management Co., Ltd., Osaka-shi, Osaka 540-6207 (JP)
(72) Inventor: OKADA Hoshihito, Chuo-ku, Osaka 540-6207 (JP); MAEDA Yoshihiko, Chuo-ku, Osaka 540-6207 (JP); HAYASHI Yoshinori, Chuo-ku, Osaka 540-6207 (JP); ENOMOTO Yoichi, Chuo-ku, Osaka 540-6207 (JP); TAKAO Hiroshi, Chuo-ku, Osaka 540-6207 (JP)
(74) Representative: Glawe, Delfs, Moll
(86) International application number: PCT/JP2013/060234
(87) International publication number: WO 2013/161533

(56) References cited:
- JP-A- H10 304 695
- JP-A- 2006 117 145
- JP-A- 2006 117 145
- JP-A- 2006 205 778
- JP-A- 2008 219 971
- JP-A- 2011 125 150
- Anonymous: "Pull-up resistor - Wikipedia, the free encyclopedia", , 5 February 2016 (2016-02-05), XP055247876, Retrieved from the Internet: URL:https://en.wikipedia.org/wiki/Pull-up_ resistor [retrieved on 2016-02-05]
- Anonymous: "Jumper (computing) - Wikipedia, the free encyclopedia", , 5 February 2016 (2016-02-05), XP055247878, Retrieved from the Internet: URL:https://en.wikipedia.org/wiki/Jumper_( computing) [retrieved on 2016-02-05]
- Audin: "Standard AC Motors Intro duction Induction Motors Reversible Motors Standard AC Motors Speed Control Motors", , 17 June 2011 (2011-06-17), page 20, XP055344599, Retrieved from the Internet: URL:http://www.audin.fr/pdf/documentations /oriental-motor/moteurs-asynchrones/FE.pdf [retrieved on 2017-02-10]

## Description

### Technical Field

The present invention relates to an inverter unit and an electric vehicle.

### Background Art

There are conventionally used electric vehicles (for example, three-wheel electric vehicles) that have a left and a right driving wheel. As motors for rotating the left and right driving wheels, for example, in-wheel motors of the same mechanism are adopted. Adopting in-wheel motors helps alleviate a drop in driving efficiency resulting from the use of differential gears. In such electric vehicles, for the left and right motors, inverter units for driving them are provided respectively. Patent Document 1 identified below discloses an inverter device having separate high- and low-side switches implemented with devices arrayed in parallel wherein an attempt is made to prevent variation among the currents through different switching modules.

### List of Citations

### Patent Literature

[Patent Document 1] JP-A-08-126349

### Summary of the Invention

### Technical Problem

In an electric vehicle as mentioned above, the motors have their respective output spindles arranged symmetric left to right, and to properly move the electric vehicle forward or reversely, the motors need to be rotated in opposite directions at left and right. To achieve that, as the inverter units, one used to drive the left motor (referred to as a left-dedicated unit) and another used to drive the right motor (referred to as a right-dedicated unit) need to be so energized as to produce rotation in opposite directions. Moreover, when the inverter units are assembled into the vehicle body, the left- and right-dedicated units need to be distinguished by appearance or the like, and since this complicates the manufacturing process of the electric vehicle, such distinction could better be avoided from the viewpoint of costs. Incidentally, Patent Document 1 does not disclose giving a left- and a right-dedicated unit the same mechanism.

Against the background discussed above, it is an object of the present invention to provide an inverter unit that makes it easy to give a left- and a right-dedicated unit the same mechanism, and to provide an electric vehicle provided with such an inverter unit.

### Means for Solving the Problem

According to the present invention, an inverter unit
is used in an electric vehicle having a left motor for rotating a left driving wheel and a right motor for rotating a right driving wheel,
is usable as either of a left inverter unit for driving the left motor and a right inverter unit for driving the right motor, and
is provided with an identification information acquiring portion which acquires, from the electric vehicle or from outside, left/right identification information which permits the inverter unit to be identified as the left or right inverter unit.

### Advantageous Effects of the Invention

With an inverter unit according to the present invention, it is easy to give a left- and a right-dedicated unit the same mechanism.

### Brief Description of Drawings

Fig. 1 is a block diagram of an electrical system of an electric vehicle according to an embodiment of the present invention;
Fig. 2 is a configuration diagram of and around an EVC circuit unit according to an embodiment of the present invention;
Fig. 3 is a configuration diagram of an inverter unit according to an embodiment of the present invention;
Fig. 4 is a configuration diagram of an electrical system of an electric vehicle according to an embodiment of the present invention;
Fig. 5 is a flow chart of how an inverter unit operates in a start-up mode; and
Fig. 6 is a flow chart of how an inverter unit and an EVC circuit unit operate in a normal mode.

### Description of Embodiments

An electric vehicle embodying the present invention will be described below with reference to the accompanying drawings.

An electric vehicle here is of any type so long as it can run by using electric power. Specifically, for example, an electric vehicle can be a vehicle classified into motor bikes, automobiles, bicycles, or "Senior Cars" (a registered trademark). An electric vehicle can have any number of wheels, for example two or four wheels. Discussed below will be three-wheel electric vehicle having three wheels. A three-wheel electric vehicle can be one having one front wheel and two rear wheels (driving wheels), or one having two front wheels (driving wheels) and one rear wheel. Discussed below will be a three-wheel electric vehicle of the former type.

### [Configuration of an Electric Vehicle]

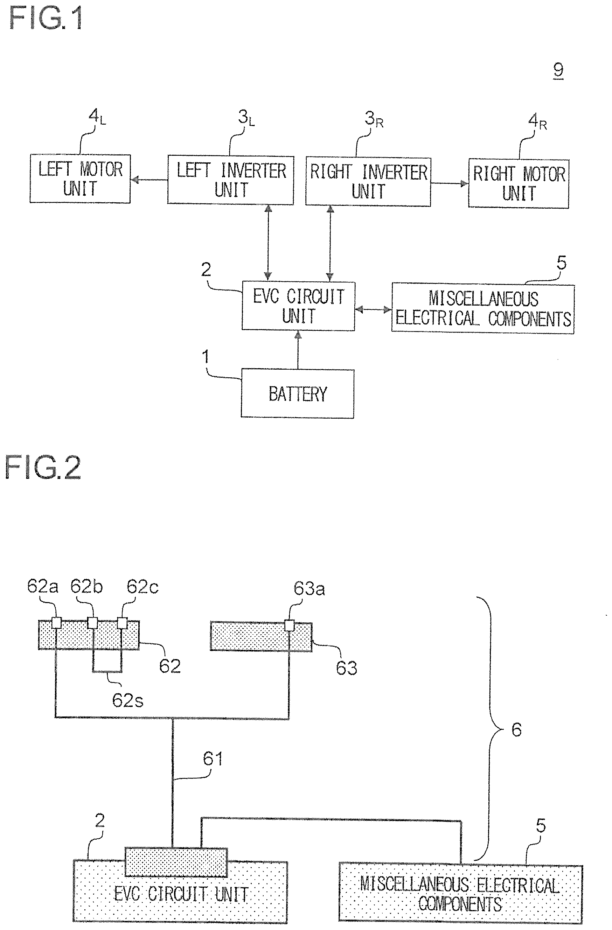

Fig. 1 is a block diagram of a main electrical system of an electric vehicle 9 according to one embodiment of the present invention. As shown there, the electric vehicle 9 is provided with a battery 1, an EVC (electric vehicle controller) circuit unit 2, a left inverter unit 3_{L}, a right inverter unit 3_{R}, a left motor unit 4_{L}, a right motor unit 4_{R}, and miscellaneous electrical components 5 (meters and lights provided on the electric vehicle 9). These are, as components of the electric vehicle 9, arranged at predetermined positions respectively.

As will be described later, the left and right inverter units 3_{L} and 3_{R} have the same mechanism, and the left and right motor units 4_{L} and 4_{R} have the same mechanism. In the following description, the left and right inverter units 3_{L} and 3_{R} are occasionally referred to collectively as the "inverter unit 3," and the left and right motor units 4_{L} and 4_{R} are occasionally referred to collectively as the "motor unit 4."

The battery 1 is, for example, a lithium-ion battery, which is a secondary (rechargeable) battery, and serves as a power source in the electric vehicle 9. The supply electric power from the battery 1 is supplied via the EVC circuit unit 2 to different parts of the electric vehicle 9.

The EVC circuit unit 2 serves to control the entire electric vehicle 9. The main operation of the EVC circuit unit 2 will be discussed later.

According to instructions from the EVC circuit unit 2, the left inverter unit 3_{L} supplies electric power to the left motor unit 4_{L} to drive the left motor unit 4_{L}. That is, the left inverter unit 3_{L} is a unit (left-dedicated unit) that is used to drive the left motor unit 4_{L}. The left motor unit 4_{L} serves to rotate the left driving wheel of the electric vehicle 9.

According to instructions from the EVC circuit unit 2, the right inverter unit 3_{R} supplies electric power to the right motor unit 4_{R} to drive the right motor unit 4_{R}. That is, the right inverter unit 3_{R} is a unit (right-dedicated unit) that is used to drive the right motor unit 4_{R}. The right motor unit 4_{R} serves to rotate the right driving wheel of the electric vehicle 9.

In the electric vehicle 9, as the left and right motor units 4_{L} and 4_{R}, common components (motor units 4 having the same mechanism) are used. Each motor unit 4 is configured, for example, as a three-phase in-wheel motor. For the manufacture of one electric vehicle 9, two such common components are prepared, of which one is used as the left motor unit 4_{L}, and the other is used as the right motor unit 4_{R}.

When the electric vehicle 9 is manufactured as described above, as the left and right motor units (4_{L} and 4_{R}), common components are used. This, as compared with a design where the left and right motor unit need to be prepared separately, is advantageous in terms of manufacturing costs etc. Moreover, being a common component, the motor unit 4 can be used at left or right as desired. Thus, it can be assembled into the vehicle body without distinction between the left and right ones. This, as compared with a design where such distinction is required, helps simplify the manufacturing process.

Likewise, in the electric vehicle 9, as the left and right inverter units 3_{L} and 3_{R}, common components (inverter units 3 having the same mechanism) are used. For the manufacture of one electric vehicle 9, two such common components are prepared, of which one is used as the left inverter unit 3_{L}, and the other is used as the right inverter unit 3_{R}.

When the electric vehicle 9 is manufactured as described above, as the left and right inverter units (3_{L} and 3_{R}), common components are used. This, as compared with a design where the left and right inverter units need to be prepared separately, is advantageous in terms of manufacturing costs etc. Moreover, being a common component, the inverter unit 3 can be used at left or right as desired. Thus, it can be assembled into the vehicle body without distinction between the left and right ones. This, as compared with a design where such distinction is required, helps simplify the manufacturing process.

The inverter units can be configured to be given, by some method or other, information that permits them to be identified as a left or right inverter unit. As one example, in this embodiment, as described below, when an inverter unit 3 is coupled to a left connector 62 or a right connector 63, it is given information that identifies it as a left or right one.

Fig. 2 is a configuration diagram of and around the EVC circuit unit 2 (in a state before the inverter units 3 are connected to the EVC circuit unit 2). As shown in Fig. 2, to the EVC circuit unit 2 is connected a main harness 6. The miscellaneous electrical components 5 are connected via the main harness 6 to the EVC circuit unit 2.

The main harness 6 includes a first supply/communication line 61. The first supply/communication line 61 is used to supply electric power from the EVC circuit unit 2 to the inverter unit 3 and to conduct CAN (controller area network) communication between the EVC circuit unit 2 and the inverter unit 3.

At an end of the first supply/communication line 61, there are provided a left connector 62 for connection with the left inverter unit 3_{L} and a right connector 63 for connection with the right inverter unit 3_{R}.

The left connector 62 has a left main terminal 62a, a first short-circuiting terminal 62b, and a second short-circuiting terminal 62c. The left main terminal 62a connects via the first supply/communication line 61 to the EVC circuit unit 2. The first and second short-circuiting terminals 62b and 62c are short-circuited together via a short-circuiting line 62s provided in the left connector 62.

The right connector 63 has a right main terminal 63a, which is a counterpart of the left main terminal 62a, but has no terminals comparable with the first and second short-circuiting terminals 62b and 62c. The right main terminal 63a connects via the first supply/communication line 61 to the EVC circuit unit 2.

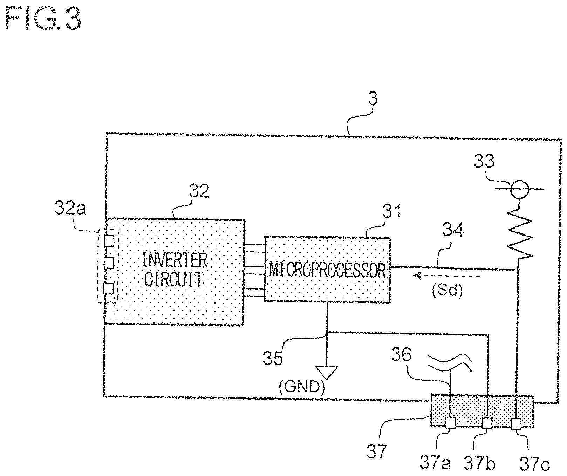

Fig. 3 is a configuration diagram of an inverter unit 3. As shown in Fig. 3, the inverter unit 3 is provided with a microprocessor 31, an inverter circuit 32, a constant-voltage source 33, an identification signal generation line 34, a ground line 35, a second supply/communication line 36, and a connector 37.

The microprocessor 31 performs various kinds of operation including that for controlling different parts of the inverter unit 3, and thereby serves to make the inverter unit 3 operate properly. The main operation of the inverter unit 3 will be discussed in detail later.

The inverter circuit 32 has motor connection terminals 32a which can be connected to a motor unit 4. According to instructions from the microprocessor 31, the inverter circuit 32 supplies electric power to, and thereby drives, the motor unit 4 connected to it.

The constant-voltage source 33, along with a resistor connected to it, constitutes a pull-up circuit, and serves to apply a predetermined voltage to the identification signal generation line 34. The identification signal generation line 34 is connected to a signal input port of the microprocessor 31. The microprocessor 31 detects the voltage on the identification signal generation line 34 as a left/right identification signal Sd. The left/right identification signal Sd is a signal containing information that permits the inverter unit 3 to be identified as the left or right inverter unit 3_{L} or 3_{R} (left/right identification information). The purpose etc. of the inclusion of the left/right identification information in the left/right identification signal Sd will be clarified later.

The ground line 35 is connected to a ground port of the microprocessor 31, and also to a ground point (GND) in the inverter unit 3. The second supply/communication line 36 is connected to different parts of the inverter unit 3, and is used to distribute the supply electric power within the inverter unit 3 and to enable the microprocessor 31 to conduct CAN communication.

The connector 37 has a main terminal 37a, a first identification terminal 37b, and a second identification terminal 37c. The main terminal 37a connects to the second supply/communication line 36, the first identification terminal 37b connects to the ground line 35, and the second identification terminal 37c connects to the identification signal generation line 34.

The connector 37 is so formed that it can be coupled to either of the left and right connectors 62 and 63 provided on the main harness 6. In the manufacturing process of the electric vehicle 9, the connector 37 is coupled to either the left or right connector 62 or 63.

When the connector 37 is coupled to the left connector 62, the inverter unit 3 that now has the connector 37 is used as the left inverter unit 3_{L}. In the manufacturing process of the electric vehicle 9, to the motor connection terminal 32a_{L} of the left inverter unit 3_{L} is connected the left motor unit 4_{L}.

When the connector 37 is coupled to the right connector 63, the inverter unit 3 that now has the connector 37 is used as the right inverter unit 3_{R}. In the manufacturing process of the electric vehicle 9, to the motor connection terminal 32a_{R} of the right inverter unit 3_{R} is connected the right motor unit 4_{R}.

Incidentally, when the connector 37 is coupled to the left connector 62, the main terminal 37a makes contact with the left main terminal 62a, the first identification terminal 37b makes contact with the first short-circuiting terminal 62b, and the second identification terminal 37c makes contact with the second short-circuiting terminal 62c.

On the other hand, when the connector 37 is coupled to the right connector 63, the main terminal 37a makes contact with the right main terminal 63a. When the connector 37 is coupled to the right connector 63, as distinct from when it is coupled to the left connector 62, the first and second identification terminals 37b and 37c remain disconnected (open).

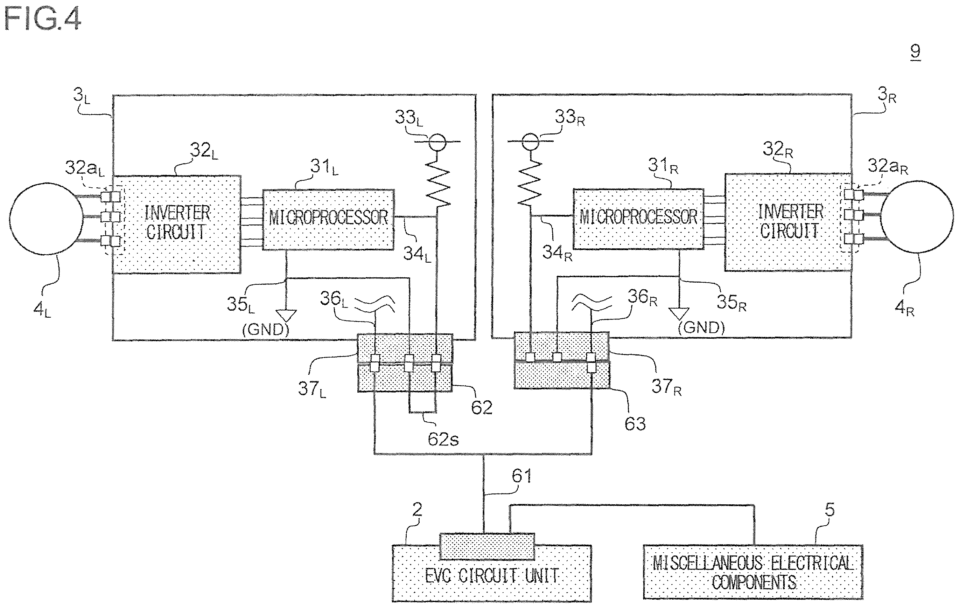

Fig. 4 shows a state where the EVC circuit unit 2, the left and right inverter units (3_{L} and 3_{R}), and the left and right motor units (4_{L} and 4_{R}) are connected together. The different parts (31_{L} to 37_{L}) of the left inverter unit 3L, and also the different parts (31_{R} to 37_{R}) of the right inverter unit 3_{R}, correspond respectively to the different parts (31 to 37) of the inverter unit 3.

As shown in Fig. 4, the connector 37_{L} of the left inverter unit 3L is coupled to the left connector 62 of the main harness 6. Thus, with respect to the left inverter unit 3_{L}, the second supply/communication line 36_{L} is connected to the first supply/communication line 61, and the identification signal generation line 34_{L} is short-circuited via the short-circuiting line 62s and the ground line 35 to the ground point (GND).

Likewise, the connector 37_{R} of the right inverter unit 3_{R} is coupled to the right connector 63 of the main harness 6. Thus, with respect to the right inverter unit 3_{R}, the second supply/communication line 36_{R} is connected to the first supply/communication line 61 of the main harness 6. However, as distinct from when connected to the left connector 62, the identification signal generation line 34_{R} is not short-circuited to the ground point (GND).

### [Operation of the Inverter Unit and the EVC Circuit Unit]

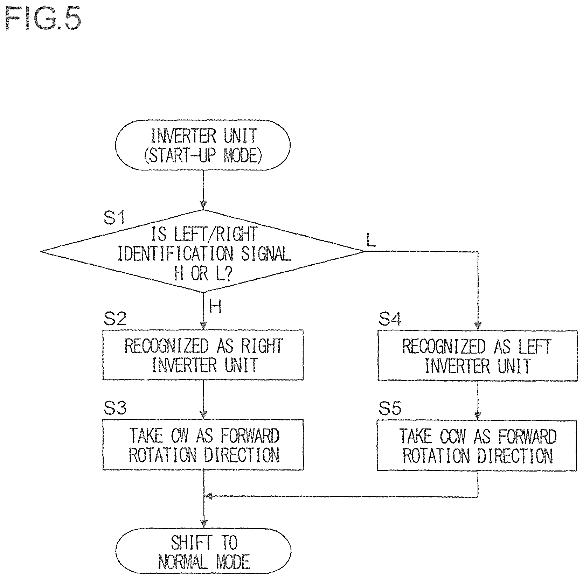

Next, the main operation of the inverter unit 3 and the EVC circuit unit 2 will be described. First, how the inverter unit 3 operates at start-up, that is, its operation in a start-up mode (common to the left and right inverter units 3_{L} and 3_{R}), will be described with reference to a flow chart in Fig. 5.

The inverter unit 3 (microprocessor 31) checks whether the left/right identification signal Sd is at H (high) or L (low) level (step S1). If the left/right identification signal Sd is at H level (step S1, H), the inverter unit 3 recognizes itself as the right inverter unit 3_{R} (step S2). Thus, the left/right identification signal Sd at H level can be said to contain left/right identification information that permits the inverter unit 3 to be identified as the right inverter unit 3_{R}.

In the inverter unit 3 that is connected to the right connector 63, the constant-voltage source 33 applies a predetermined voltage to the identification signal generation line 34, and in addition the identification signal generation line 34 is not short-circuited to the ground point (GND); thus, the identification signal generation line 34 is at H level. Accordingly, based on the left/right identification signal Sd, the inverter unit 3 that is connected to the right connector 63 can correctly recognize itself as the right inverter unit 3_{R}. In this way, left/right identification information that enables identification of the right inverter unit 3_{R} is acquired from the right connector 63 (part of the electric vehicle 9).

When the inverter unit 3 (microprocessor 31) recognizes itself as the right inverter unit 3_{R}, it then takes, as the forward rotation direction of the motor unit 4 it drives, a predetermined first direction (in this embodiment, the CW (clockwise) direction) (step S3). The first direction is a direction in which the right motor unit 4_{R} rotates to move the electric vehicle 9 forward. On completion of the operation thus far, the start-up mode ends. The inverter unit 3 then shifts into a normal mode, where it functions as the right inverter unit 3_{R}.

On the other hand, if the left/right identification signal Sd is at L level (step S1, L), the inverter unit 3 (microprocessor 31) recognizes itself as the left inverter unit 3_{L} (step S4). Thus, the left/right identification signal Sd at L level can be said to contain left/right identification information that permits the inverter unit 3 to be identified as the left inverter unit 3_{L}.

In the inverter unit 3 that is connected to the left connector 62, the constant-voltage source 33 applies a predetermined voltage to the identification signal generation line 34, but the identification signal generation line 34 is short-circuited to the ground point (GND); thus, the left/right identification signal Sd is at L level. Accordingly, based on the left/right identification signal Sd, the inverter unit 3 that is connected to the left connector 62 can correctly recognize itself as the left inverter unit 3_{L}. In this way, left/right identification information that enables identification of the left inverter unit 3_{L} is acquired from the left connector 62 (part of the electric vehicle 9).

When the inverter unit 3 (microprocessor 31) recognizes itself as the left inverter unit 3_{L}, it then takes, as the forward rotation direction of the motor unit 4 it drives, a second direction (in this embodiment, the CCW (counter-clockwise) direction) which is opposite to the first direction (step S5). The second direction is a direction in which the left motor unit 4_{L} rotates to move the electric vehicle 9 forward.

As described above, the inverter unit 3 takes, as the forward rotation direction of the motor unit 4 it drives, opposite directions between when the inverter unit 3 recognizes itself as the right inverter unit 3_{R} and when the inverter unit 3 recognizes itself as the left inverter unit 3_{L}. On completion of the operation thus far, the start-up mode ends. The inverter unit 3 then shifts into the normal mode, where it functions as the left inverter unit 3_{L}.

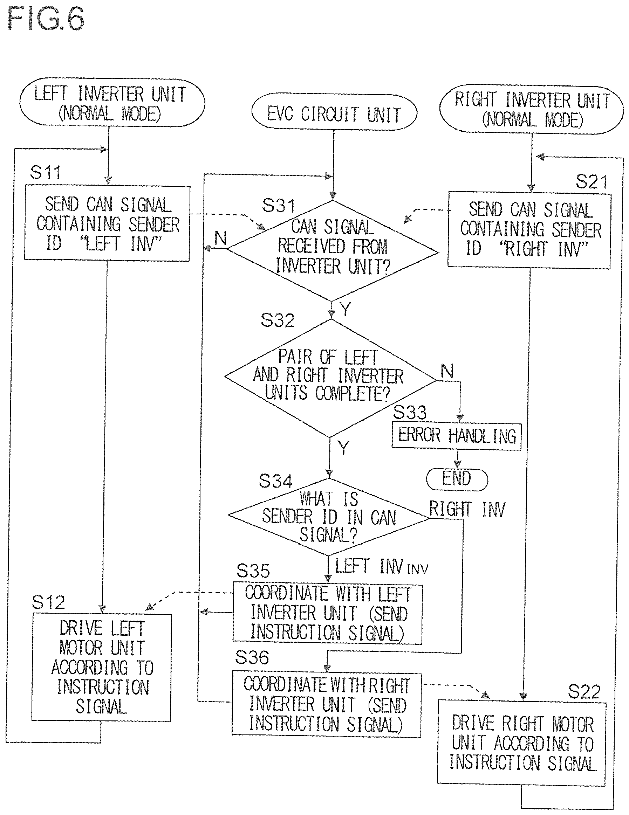

Next, how the left and right inverter units 3_{L} and 3_{R} and the EVC circuit unit 2 operate in the normal mode will be described with reference to a flow chart in Fig. 6.

First, a description will be given of the operation of the left inverter unit 3_{L} in the normal mode. The left inverter unit 3_{L} (microprocessor 31_{L}) transmits to the EVC circuit unit 2 a CAN signal containing a sender ID (for convenience' sake, assumed to be "LEFT INV") identifying the left inverter unit 3_{L} (step S11). Here, the sender ID "LEFT INV" can be of any other form so long as it enables the EVC circuit unit 2 to identify the source of the CAN signal as the left inverter unit 3_{L}.

The EVC circuit unit 2 is so configured as to transmit, in response to the CAN signal from the left inverter unit 3_{L}, a CAN signal as an instruction signal for the left inverter unit 3_{L} (see, for example, the operation at step S35, which will be described later). Then, according to the instruction signal from the EVC circuit unit 2, the left inverter unit 3_{L} drives the left motor unit 4_{L} (step S12).

For example, if the left inverter unit 3_{L} receives an instruction signal for "forward rotation," it drives the left motor unit 4_{L} to rotate forward; if the left inverter unit 3_{L} receives an instruction signal for "reverse rotation," it drives the left motor unit 4_{L} to rotate reversely. By repeating the operation at steps S11 and S12, the left inverter unit 3_{L}, in coordination with the EVC circuit unit 2, drives the left motor unit 4_{L}.

Next, a description will be given of the operation of the right inverter unit 3_{R} in the normal mode. The right inverter unit 3_{R} (microprocessor 31_{R}) transmits to the EVC circuit unit 2 a CAN signal containing a sender ID (for convenience' sake, assumed to be "RIGHT INV") identifying the right inverter unit 3_{R} (step S21). Here, the sender ID "RIGHT INV" can be of any other form so long as it enables the EVC circuit unit 2 to identify the source of the CAN signal as the right inverter unit 3_{R}.

The EVC circuit unit 2 is so configured as to transmit, in response to the CAN signal from the right inverter unit 3_{R}, a CAN signal as an instruction signal for the right inverter unit 3_{R} (see, for example, the operation at step S36, which will be described later). Then, according to the instruction signal from the EVC circuit unit 2, the right inverter unit 3_{R} drives the right motor unit 4_{R} (step S22).

For example, if the right inverter unit 3_{R} receives an instruction signal for "forward rotation," it drives the right motor unit 4_{R} to rotate forward; if the right inverter unit 3_{R} receives an instruction signal for "reverse rotation," it drives the right motor unit 4_{R} to rotate reversely. By repeating the operation at steps S21 and S22, the right inverter unit 3_{R}, in coordination with the EVC circuit unit 2, drives the right motor unit 4_{R}.

Next, the operation of the EVC circuit unit 2 will be described. The EVC circuit unit 2 waits for receipt of a CAN signal from the inverter unit 3 (step S31). On receiving the CAN signal (step S31, Y), based on the sender ID contained in the CAN signal, the EVC circuit unit 2 checks whether a inverter unit 3 identified as the left inverter unit 3_{L} and a inverter unit 3 identified as the right inverter unit 3_{R} are both available (hereinafter also referred to as the "pair of left and right inverter units 3" being complete) (step S32).

For example, the EVC circuit unit 2 checks whether or not it receives both a CAN signal with a sender ID "LEFT INV" and a CAN signal with a sender ID "RIGHT INV" within a predetermined period. If the EVC circuit unit 2 receives both, it determines that the pair of left and right inverter units 3 is complete (of the pair of left and right inverter units 3, both are available); otherwise, the EVC circuit unit 2 determines that the pair of left and right inverter units 3 is not complete (of the pair of left and right inverter units 3, at least one is not available).

The electric vehicle 9 is inherently supposed to have the pair of left and right inverter units 3 complete, and if not, it is presumed that some fault has occurred. If the motor unit 4 is driven without the pair of left and right inverter units 3 complete, trouble may arise such as, for example, the left and right driving wheels rotating in the wrong directions (one driving wheel rotating in a way to move the electric vehicle 9 forward while the other driving wheel rotating in a way to move the electric vehicle 9 reversely).

To avoid that, if it is determined that the pair of left and right inverter units 3 is not complete (step S32, N), the EVC circuit unit 2 performs predetermined error handling (step S33), and ends the operation at steps S31 through S36. In this way, both motor units 4_{L} and 4_{R} are inhibited from being driven, and thereby the motor unit 4 is prevented from being driven without the pair of left and right inverter units 3 complete. The error handling involves, for example, giving off a predetermined alarm (by displaying or sounding it).

On the other hand, when it is determined that the pair of left and right inverter units 3 is complete (step S32, Y), the EVC circuit unit 2 operates to achieve coordination with the inverter unit 3. Specifically, if the sender ID contained in the received CAN signal is "LEFT INV" (step S34, "LEFT INV"), the EVC circuit unit 2 operates in coordination with the left inverter unit 3_{L} (step S35); if the sender ID contained in the received CAN signal is "RIGHT INV" (step S34, "RIGHT INV"), the EVC circuit unit 2 operates in coordination with the right inverter unit 3_{R} (step S36).

The operation of the EVC circuit unit 2 at step S35 involves, in a situation where the electric vehicle 9 is expected to move forward, transmitting an instruction signal (CAN signal) for forward rotation to the left inverter unit 3_{L} and, in a situation where the electric vehicle 9 is expected to move reversely, transmitting an instruction signal (CAN signal) for reverse rotation to the left inverter unit 3_{L}. As a result, the left inverter unit 3_{L} drives the left motor unit 4_{L} so that the electric vehicle 9 moves forward or reversely as expected.

The operation of the EVC circuit unit 2 at step S36 involves, in a situation where the electric vehicle 9 is expected to move forward, transmitting an instruction signal (CAN signal) for forward rotation to the right inverter unit 3_{R} and, in a situation where the electric vehicle 9 is expected to move reversely, transmitting an instruction signal (CAN signal) for reverse rotation to the right inverter unit 3_{R}. As a result, the right inverter unit 3_{R} drives the right motor unit 4_{R} so that the electric vehicle 9 moves forward or reversely as expected.

As described above, when moving the electric vehicle 9 forward, the EVC circuit unit 2 has only to send an instruction signal for "forward rotation" to both the left and right inverter units (3_{L} and 3_{R}), and when moving the electric vehicle 9 reversely, the EVC circuit unit 2 has only to send an instruction signal for "reverse rotation" to both the left and right inverter units (3_{L} and 3_{R}). That is, when moving the electric vehicle 9 forward or reversely, the EVC circuit unit 2 has only to send the same instruction to both inverter units (3_{L} and 3_{R}), and this, as compared with a design where different instructions need to be sent to them, helps reduce the burden of processing.

What has been described above is not meant to limit how the inverter unit 3 and the EVC circuit unit 2 operate, and many modifications are possible. For example, the operation at step S32 can be performed only at the start-up of the electric vehicle 9, or can be performed continually, on a periodic or basis. The operation at step S32 can be omitted, in which case the EVC circuit unit 2, on receiving a CAN signal from the inverter unit 3 (step S31, Y), performs the operation from step S34 on.

### [Other]

As described above, an inverter unit 3 is used in an electric vehicle 9 having a left motor unit 4_{L} for rotating a left driving wheel and a right motor unit 4_{R} for rotating a right driving wheel, and is usable as either of a left inverter unit 3_{L} for driving the left motor unit 4_{L} and a right inverter unit 3_{R} for driving the right motor unit 4_{R}. The inverter unit 3 is provided with a functional block (identification information acquiring portion) which acquires, from a left connector 62 or a right connector 63 (part of the electric vehicle 9), left/right identification information which permits the inverter unit 3 to be identified as the left or right inverter unit 3_{L} or 3_{R}. The identification information acquiring portion can acquire the left/right identification information from the electric vehicle 9, or from outside.

Thus, with the inverter unit 3, it is easy to give the same mechanism to the left inverter unit 3_{L} (used to drive the left motor unit 4_{L}) and the right inverter unit 3_{R} (used to drive the right motor unit 4_{R}).

Based on the left/right identification information, the inverter unit 3 recognizes itself as either the left or right inverter unit 3_{L} or 3_{R}. On recognizing itself as the left inverter unit 3_{L}, the inverter unit 3 takes, as the forward rotation direction of the motor it drives, a predetermined first direction. On recognizing itself as the right inverter unit 3R, the inverter unit 3 takes, as the forward rotation direction of the motor it drives, a second direction which is opposite to the first direction. Thus, the left and right inverter units (3_{L} and 3_{R}) both drive the respective motor units 4 to rotate in the forward rotation, and this enables the electric vehicle 9 to move forward as it should.

An electric vehicle 9 is provided with a left motor unit 4_{L} for rotating a left driving wheel, a right motor unit 4_{R} for rotating a right driving wheel, an inverter unit 3 used as the left inverter unit _{3L}, and an inverter unit 3 used as the right inverter unit _{3R}, and is further provided with an information providing portion (corresponding to the left and right connectors 62 and 63 in the embodiment) which feeds the left/right identification information to the identification information acquiring portion of the respective inverter units 3. Thus, in the electric vehicle 9, by use of the two inverter units 3, it is possible to drive the left and right motor units 4_{L} and 4_{R} properly.

The electric vehicle 9 is further provided with a left connector 62 for connection with the left inverter unit 3_{L} and a right connector 63 for connection with the right inverter unit 3_{R}. The left connector 62 is so formed as to feed the identification information acquiring portion of whichever of the inverter units is connected to it with the left/right identification information such that this inverter unit 3 identifies itself as the left inverter unit 3_{L}, and the right connector 63 is so formed as to feed the identification information acquiring portion of whichever of the inverter units is connected to it with the left/right identification information such that this inverter unit 3 identifies itself as the right inverter unit 3_{R}.

Specifically, the identification information acquiring portion has an identification signal generation line 34, to which a predetermined voltage is applied, and a ground point, and acquires the left/right identification information by detecting the voltage Vd on the identification signal generation line 34 (in the embodiment, H level corresponds to the right inverter unit 3_{R} and L level corresponds to the left inverter unit 3_{L}). One of the left and right connectors 62 and 63 (in the embodiment, the left connector 62) is so formed as to short-circuit between the identification signal generation line 34 and the ground point of whichever of the inverter units is connected to it. Thus, in the electric vehicle 9, the left/right identification information can be fed to the respective inverter units (3_{L}, 3_{R}) properly with a simple configuration.

An EVC circuit unit 2 serves also as a determining portion which determines whether or not the inverter unit 3 recognized as the left inverter unit 3_{L} and the inverter unit 3 recognized as the right inverter unit 3_{R} are both available. The EVC circuit unit 2 further so operates that, if it is determined that at least one of the inverter unit 3 recognized as the left inverter unit 3_{L} and the inverter unit 3 recognized as the right inverter unit 3_{R} is not available, the left and right motor units 4_{R} are inhibited from being driven. Thus, in the electric vehicle 9, the left and right driving wheels are prevented from rotating in the wrong directions.

### Industrial Applicability

The present invention finds applications in a variety of electric vehicles and the like.

### List of Reference Signs

- 1: battery
- 2: EVC circuit unit
- 3: inverter unit
- 3_{L}: left inverter unit
- 3_{R}: right inverter unit
- 31: microprocessor
- 32: inverter circuit
- 33: constant-voltage source
- 34: identification signal generation line
- 35: ground line
- 36: second supply/communication line
- 37: connector
- 4: motor unit
- 4_{L}: left motor unit
- 4_{R}: right motor unit
- 5: miscellaneous electrical components
- 6: main harness
- 61: first supply/communication line
- 62: left connector
- 63: right connector
- 9: electric vehicle

## Claims

1. An inverter unit (3L, 3R) and a vehicle side connector for driving a motor for rotating a driving wheel of an electric vehicle (9), the inverter unit including control circuitry (31),
**characterized in that**
the vehicle side connector includes an electric vehicle-side left connector (62) and an electric vehicle-side right connector (63),
the inverter unit (3L, 3R) further includes an identification information acquiring portion (31, 34, 35, 37) adapted to detect different electrical signals respectively when the inverter unit is used as a left inverter unit (3L) for driving a left motor (4L) for rotating a left driving wheel of the electric vehicle (9) and when the inverter unit is used as a right inverter unit (3R) for driving a right motor (4R) for rotating a right driving wheel of the electric vehicle (9),
the identification information acquiring portion (31, 34, 35, 37) includes
an identification signal generation line (34) to which a predetermined voltage is applied and
an inverter-side connector (37),
one of the electric vehicle-side left connector (62) and the electric vehicle-side right connector (63) is connected to the inverter-side connector (37),
one of the electric vehicle-side left connector (62) and the electric vehicle-side right connector (63) is formed so as to short-circuit between the identification signal generation line (34) and a ground point such that, either when the electric vehicle-side left connector (62) is connected to the inverter-side connector (37) or when the electric vehicle-side right connector (63) is connected to the inverter-side connector (37), the short-circuiting is achieved,
the identification information acquiring portion (31, 34, 35, 37) detects a voltage on the identification signal generation line (34) as the electrical signals, and
based on the electrical signals, the control circuitry (31) makes the left motor (4L) rotate forward in a first direction when the inverter unit is used as the left inverter unit (3L) and makes the right motor (4R) rotate forward in a second direction opposite to the first direction when the inverter unit is used as the right inverter unit (3R).

2. An electric vehicle comprising:
a left motor (4L) for rotating a left driving wheel;
a right motor (4R) for rotating a right driving wheel;
an inverter unit and a vehicle side connector according to claim 1 for use as the left inverter unit (3L) for driving the left motor (4L); and
an inverter unit and a vehicle side connector according to claim 1 for use as the right inverter unit (3R) for driving the right motor (4R).

3. The electric vehicle according to claim 2, wherein
the electric vehicle-side left connector (62) is used for connection with the left inverter unit (3L);
the electric vehicle-side right connector (63) is used for connection with the right inverter unit (3R),
the identification information acquiring portion (31, 34, 35, 37) of the inverter units (3L, 3R) comprises an identification signal generation line (34) to which a predetermined voltage is applied, and
one of the electric vehicle-side left connector (62) and the electric vehicle-side right connector (63) includes a short-circuiting terminal that short-circuits between the identification signal generation line (34) and a ground point in whichever of the inverter units (3L, 3R) is connected thereto.

4. The electric vehicle according to claim 2, further comprising a determining portion (2) adapted to determine whether or not the inverter unit used as the left inverter unit (3L) and the inverter unit used as the right inverter unit (3R) are both available.

5. The electric vehicle according to claim 2, further comprising a determining portion (2) adapted to inhibit the left motor (4L) and the right motor (4R) from being driven
if at least one of the inverter unit used as the left inverter unit (3L) and the inverter unit used as the right inverter unit (3R) is not available.

## Patentansprüche

1. Invertereinheit (3L, 3R) und ein fahrzeugseitiger Anschluss zum Antreiben eines Motors zum Drehen eines Antriebsrads eines elektrischen Fahrzeugs (9), wobei die Invertereinheit eine Steuerungsschaltung (31) einschließt,
**dadurch gekennzeichnet, dass**
der fahrzeugseitige Anschluss einen elektrofahrzeugseitigen linken Anschluss (62) und einen elektrofahrzeugseitigen rechten Anschluss (63) einschließt,
die Invertereinheit (3L, 3R) weiter einen Identifizierungsinformation-Erlangungsteil (31, 34, 35, 37) einschließt, der angepasst ist, jeweils unterschiedliche elektrische Signale zu erfassen, wenn die Invertereinheit als eine linke Invertereinheit (3L) zum Antreiben eines linken Motors (4L) zum Drehen eines linken Antriebsrads des elektrischen Fahrzeugs (9) verwendet wird und wenn die Invertereinheit als eine rechte Invertereinheit (3R) zum Antreiben eines rechten Motors (4R) zum Drehen eines rechten Antriebsrads des elektrischen Fahrzeugs (9) verwendet wird, der Identifizierungsinformation-Erlangungsteil (31, 34, 35, 37) einschließt
eine Identifizierungssignalerzeugungsleitung (34), an die eine vorgegebene Spannung angelegt wird, und
einen inverterseitigen Anschluss (37),
einer von dem elektrofahrzeugseitigen linken Anschluss (62) und dem elektrofahrzeugseitigen rechten Anschluss (63) mit dem inverterseitigen Anschluss (37) verbunden wird,
einer von dem elektrofahrzeugseitigen linken Anschluss (62) und dem elektrofahrzeugseitigen rechten Anschluss (63) so gebildet ist, dass er die Identifizierungssignalerzeugungsleitung (34) und einen Massepunkt kurzschließt, sodass, entweder wenn der elektrofahrzeugseitige linke Anschluss (62) mit dem inverterseitigen Anschluss (37) verbunden wird oder wenn der elektrofahrzeugseitige rechte Anschluss (63) mit dem inverterseitigen Anschluss (37) verbunden wird, der Kurzschluss erreicht wird,
der Identifizierungsinformation-Erlangungsteil (31, 34, 35, 37) eine Spannung an der Identifizierungssignalerzeugungsleitung (34) als die elektrischen Signale erfasst und,
basierend auf den elektrischen Signalen, die Steuerungsschaltung (31) den linken Motor (4L) veranlasst, in einer ersten Richtung vorwärts zu drehen, wenn die Invertereinheit als die linke Invertereinheit (3L) verwendet wird, und den rechten Motor (4R) veranlasst, in einer zweiten Richtung vorwärts zu drehen, die der ersten Richtung entgegengesetzt ist, wenn die Invertereinheit als die rechte Invertereinheit (3R) verwendet wird.

2. Elektrisches Fahrzeug, das umfasst:
einen linken Motor (4L) zum Drehen eines linken Antriebsrads;
einen rechten Motor (4R) zum Drehen eines rechten Antriebsrads;
eine Invertereinheit und einen fahrzeugseitigen Anschluss gemäß Anspruch 1 zur Verwendung als die linke Invertereinheit (3L) zum Antreiben des linken Motors (4L); und
eine Invertereinheit und einen fahrzeugseitigen Anschluss gemäß Anspruch 1 zur Verwendung als die rechte Invertereinheit (3R) zum Antreiben des rechten Motors (4R).

3. Elektrisches Fahrzeug gemäß Anspruch 2, wobei
der elektrofahrzeugseitige linke Anschluss (62) zur Verbindung mit der linken Invertereinheit (3L) verwendet wird;
der elektrofahrzeugseitige rechte Anschluss (63) zur Verbindung mit der rechten Invertereinheit (3R) verwendet wird,
der Identifizierungsinformation-Erlangungsteil (31, 34, 35, 37) der Invertereinheiten (3L, 3R) eine Identifizierungssignalerzeugungsleitung (34) umfasst, an die eine vorgegebene Spannung angelegt wird, und
einer von dem elektrofahrzeugseitigen linken Anschluss (62) und dem elektrofahrzeugseitigen rechten Anschluss (63) eine Kurzschlussklemme einschließt, welche die Identifizierungssignalerzeugungsleitung (34) und einen Massepunkt kurzschließt, in einer der Inverter Einheiten (3L, 3R), die damit verbunden wird.

4. Elektrisches Fahrzeug gemäß Anspruch 2, das weiter einen Bestimmungsteil (2) umfasst, der angepasst ist zu bestimmen, ob die Invertereinheit, welche als die linke Invertereinheit (3L) verwendet wird, und die Invertereinheit, welche als die rechte Invertereinheit (3R) verwendet wird, beide verfügbar sind oder nicht.

5. Elektrisches Fahrzeug gemäß Anspruch 2, das weiter einen Bestimmungsteil (2) umfasst, der angepasst ist, den linken Motor (4L) und den rechten Motor (4R) daran zu hindern, angetrieben zu werden,
wenn mindestens eine von der Invertereinheit, welche als die linke Invertereinheit (3L) verwendet wird, und der Invertereinheit, welche als die rechte Invertereinheit (3R) verwendet wird, nicht verfügbar ist.

## Revendications

1. Unité d'inverseur (3L, 3R) et connecteur côté véhicule pour actionner un moteur pour faire tourner une roue motrice d'un véhicule électrique (9), l'unité d'inverseur comprenant un circuit de commande (31),
**caractérisée en ce que**:
le connecteur côté véhicule comprend un connecteur côté gauche du véhicule électrique (62) et un connecteur côté droit du véhicule électrique (63),
l'unité d'inverseur (3L, 3R) comprend en outre une partie d'acquisition d'informations d'identification (31, 34, 35, 37) adaptée pour détecter différents signaux électriques respectivement lorsque l'unité d'inverseur est utilisée comme unité d'inverseur gauche (3L) pour actionner un moteur gauche (4L) pour faire tourner une roue motrice gauche du véhicule électrique (9), et lorsque l'unité d'inverseur est utilisée comme unité d'inverseur droite (3R) pour actionner un moteur droit (4R) pour faire tourner une roue motrice droite du véhicule électrique (9),
la partie d'acquisition d'informations d'identification (31, 34, 35, 37) comprend:
une ligne de génération de signaux d'identification (34) à laquelle une tension prédéterminée est appliquée, et
un connecteur côté inverseur (37),
un parmi le connecteur côté gauche du véhicule électrique (62) et le connecteur côté droit du véhicule électrique (63) est connecté au connecteur côté inverseur (37),
un parmi le connecteur côté gauche du véhicule électrique (62) et le connecteur côté droit du véhicule électrique (63) est formé de manière à faire un court-circuit entre la ligne de génération de signaux d'identification (34) et un point de terre de telle sorte que le court-circuit se produise soit lorsque le connecteur côté gauche du véhicule électrique (62) est connecté au connecteur côté inverseur (37), soit lorsque le connecteur côté droit du véhicule électrique (63) est connecté au connecteur côté inverseur (37),
la partie d'acquisition d'informations d'identification (31, 34, 35, 37) détecte une tension sur la ligne de génération de signaux d'identification (34) en tant que signaux électriques, et
sur la base des signaux électriques, le circuit de commande (31) fait tourner le moteur gauche (4L) vers l'avant dans une première direction lorsque l'unité d'inverseur est utilisée comme unité d'inverseur gauche (3L), et fait tourner le moteur droit (4R) vers l'avant dans une seconde direction opposée à la première direction lorsque l'unité d'inverseur est utilisée comme unité d'inverseur droite (3R).

2. Véhicule électrique, comprenant:
un moteur gauche (4L) pour faire tourner une roue motrice gauche;
un moteur droit (4R) pour faire tourner une roue motrice droite;
une unité d'inverseur et un connecteur côté véhicule selon la revendication 1 à utiliser comme unité d'inverseur gauche (3L) pour entraîner le moteur gauche (4L); et
une unité d'inverseur et un connecteur côté véhicule selon la revendication 1 à utiliser comme unité d'inverseur droit (3R) pour entraîner le moteur droit (4R).

3. Véhicule électrique selon la revendication 2, dans lequel:
le connecteur côté gauche du véhicule électrique (62) est utilisé pour la connexion avec l'unité d'inverseur gauche (3L) ;
le connecteur côté droit du véhicule électrique (63) est utilisé pour la connexion avec l'unité d'inverseur droite (3R) ;
la partie d'acquisition d'informations d'identification (31, 34, 35, 37) des unités d'inverseur (3L, 3R) comprend une ligne de génération de signaux d'identification (34) à laquelle une tension prédéterminée est appliquée, et
un parmi le connecteur côté gauche du véhicule électrique (62) et le connecteur côté droit du véhicule électrique (63) comprend une borne de court-circuit qui effectue un court-circuit entre la ligne de génération de signaux d'identification (34) et un point de terre quelle que soit celle des unités d'inverseur (3L, 3R) qui est connectée à celui-ci.

4. Véhicule électrique selon la revendication 2, comprenant en outre une partie de détermination (2) adaptée pour déterminer si l'unité d'inverseur utilisée comme unité d'inverseur gauche (3L) et l'unité d'inverseur utilisée comme unité d'inverseur droite (3R) sont toutes les deux disponibles ou non.

5. Véhicule électrique selon la revendication 2, comprenant en outre une partie de détermination (2) adaptée pour empêcher le moteur gauche (4L) et le moteur droit (4R) d'être entraînée si au moins une parmi l'unité d'inverseur utilisée comme unité d'inverseur gauche (3L) et l'unité d'inverseur utilisée comme unité d'inverseur droite (3R) n'est pas disponible.
